(19) Europäisches Patentamt
European Patent Office
Office européen des brevets

(11) **EP 2 501 967 B1**

(12) **EUROPÄISCHE PATENTSCHRIFT**

(45) Veröffentlichungstag und Bekanntmachung des Hinweises auf die Patenterteilung:
**23.11.2016  Patentblatt 2016/47**

(21) Anmeldenummer: **10759635.5**

(22) Anmeldetag: **28.09.2010**

(51) Int Cl.:
***F16K 31/06*** *(2006.01)*

(86) Internationale Anmeldenummer:
**PCT/EP2010/064331**

(87) Internationale Veröffentlichungsnummer:
**WO 2011/060989 (26.05.2011 Gazette 2011/21)**

(54) **SCHALTVENTIL MIT EINEM IN EINEM GEHÄUSE BEWEGBAREN VENTILELEMENT**

SWITCHING VALVE WITH A VALVE ELEMENT MOVEABLE IN A HOUSING

SOUPAPE DE COMMANDE AVEC UN ORGANE MOBILE DANS LE CORPS DE SOUPAPE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.11.2009  DE 102009046822**

(43) Veröffentlichungstag der Anmeldung:
**26.09.2012  Patentblatt 2012/39**

(73) Patentinhaber: **Robert Bosch GmbH**
**70442 Stuttgart (DE)**

(72) Erfinder:
• **SZERMUTZKY, Valentin**
**63486 Bruchkoebel (DE)**
• **ROTH, Heiko**
**74081 Heilbronn (DE)**

(56) Entgegenhaltungen:
**EP-A2- 0 698 738      DE-A1- 10 160 970**
**DE-A1- 10 254 246      DE-A1- 19 935 098**
**DE-C1- 19 754 525**

EP 2 501 967 B1

**Beschreibung**

Stand der Technik

Die Erfindung betrifft ein Schaltventil.

Schaltventile, insbesondere schnell schaltende Magnetventile, sind vom Markt her bekannt. Sie werden beispielsweise im automotiven Bereich bei Einspritzanlagen, Automatikgetrieben oder in Antiblockiersystemen verwendet.

Häufig weisen sie kurze Ein- und Ausschaltzeiten und damit hohe Schaltfrequenzen auf. Solche Schaltventile werden oft von einem Elektromagneten betätigt, wobei ein Magnetanker eine axiale Bewegung ausführt, die durch einen Ruhesitz und einen Hubanschlag begrenzt wird. Häufig wird der Anker bei Betätigung bestromt, und nach Abschalten des Stroms wird der Anker durch eine Feder wieder in seine ursprüngliche Lage zurück bewegt. Bekannt ist es weiterhin, ein solches Schaltventil durch eine an die Bauart des Schaltventils angepasste Vorrichtung zu bedämpfen.

EP 0 698 738 A2 beschreibt ein Ansaug- bzw. Proportionalregelventil. Dieses weist eine Betätigungseinrichtung auf, die von zwei in Reihe geschalteten Federn mit unterschiedlicher Federkennlinie beaufschlagt wird. Hierdurch kann das Regelverhalten, insbesondere die Empfindlichkeit bei geschlossenem Regelventil verbessert werden. In die gleiche Richtung gehen auch die DE 199 35 098 A1 und die DE 102 54 246 A1.

Des weiteren wird auf folgende Veröffentlichungen verwiesen: DE 10 2007 034 038 A1, DE 10 2007 028 960 A1, DE 10 2005 022 661 A1, DE 10 2004 061 798 A1, DE102004061798 A1, DE 103 27 411 A1, DE 198 34 121 A1, EP 1 701 031 A1, EP 1 471 248 A1 und EP 1 296 061 A2.

Offenbarung der Erfindung:

Das der Erfindung zugrunde liegende Problem wird durch ein Schaltventil nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Das erfindungsgemäße Schaltventil hat den Vorteil, dass die Anschlaggeschwindigkeit eines Ventilelements oder eines damit gekoppelten Ankers an einen Anschlag reduziert wird, ohne dass die Schaltzeiten des Schaltventils wesentlich verlängert werden. Durch die geringere Anschlaggeschwindigkeit wird der Verschleiß des Schaltventils verringert. Ebenso werden Druckpulsationen im zu fördernden Medium vermindert. Außerdem wird die Anregung mechanischer Schwingungen und damit die Geräuschabstrahlung verringert.

Die Erfindung geht von der Überlegung aus, die Federeinrichtung so auszugestalten, dass sie bei einem zunehmenden Federweg eine nicht linear sondern progressiv zunehmende Federkraft erfordert. Durch eine solche progressive Federcharakteristik (Federkennlinie) kann das Ventilelement in seiner Bewegung, insbesondere vor Erreichen einer Endlage, wirkungsvoll gebremst werden. Dabei setzt die Federwirkung vergleichsweise früh aber weich ein, und wird erst gegen Ende der Bewegung des Ventilelements deutlich stärker. Das bedeutet, dass das Ventilelement über einen weiten Bewegungsbereich nur schwach von der Federeinrichtung beaufschlagt wird, so dass anfangs eine schnelle Beschleunigung des Ventilelements ermöglicht wird. Beispielsweise ab der Hälfte eines Hubs des Ventilelements findet als Folge der progressiv zunehmenden Federkraft keine Beschleunigung des Ventilelements mehr statt. Dabei kann sich - abhängig von den Eigenschaften der Betätigungseinrichtung und der Feder - vorübergehend eine in etwa gleichförmige Bewegung ergeben. Vergleichsweise kurz vor dem Erreichen der Endlage wird das Ventilelement deutlich stärker und spätestens an der Endlage bis zum Stillstand abgebremst. Gegenüber einer nur linear zunehmenden Federkraft wird die Anschlaggeschwindigkeit stärker verringert. Dabei werden die Schaltzeiten des Schaltventils nicht wesentlich verlängert. Ein weiterer Vorteil der Erfindung besteht darin, dass - im Gegensatz zu einer Anordnung mit nur einem Federabschnitt mit großer Federkonstante - die Toleranzempfindlichkeit der Federvorspannkraft geringer ist und somit das Einstellen der Federvorspannung vereinfacht wird.

Das Schaltventil arbeitet besser, wenn die Federeinrichtung eine Reihenschaltung von mindestens zwei Federabschnitten umfasst, wobei der maximale Federweg eines Federabschnitts kleiner ist als der maximale Hub des Ventilelements. Durch eine solche Anordnung von mindestens zwei Federabschnitten wird die Vorraussetzung geschaffen, die Federeinrichtung in vielfältiger Weise zu dimensionieren. Entsprechend der Reihenschaltung der Federabschnitte und deren gegebenenfalls unterschiedlicher Steifigkeit teilt sich dabei der Hub des Ventilelements auf die einzelnen Federabschnitte auf, das heißt, der maximale Federweg eines jeden Federabschnitts ist kleiner als der Federweg in der Summe.

Dazu wird vorgeschlagen, dass mindestens zwei Federabschnitte über ein Zwischenstück gekoppelt sind, wobei das Zwischenstück an einem Abschnitt des Gehäuses anschlägt, bevor der maximale Hub des Ventilelements erreicht ist, so dass der weichere Federabschnitt nachfolgend überbrückt wird. Daraus ergibt sich eine Wirkung der Federeinrichtung wie folgt: In einer ersten Phase der Bewegung des Ventilelementes ist das Zwischenstück noch nicht an dem Abschnitt des Gehäuses angeschlagen, so dass die Kraft auf sämtliche der in Reihe geschalteten Federabschnitte wirkt. Dabei werden alle Federabschnitte mit gleicher Kraft gestaucht. Entsprechend ist die sich ergebende gesamte Federkonstante relativ klein, so dass die Federeinrichtung das sich bewegende Ventilelement zunächst mit vergleichsweise geringer Kraft beaufschlagt. Im weiteren Verlauf der Bewegung des Ventilelements schlägt das Zwischenstück an dem Abschnitt des Gehäuses an. Dadurch wird wenigstens ein Federabschnitt überbrückt, da er nachfolgend nicht stärker gestaucht werden kann. Im weiteren Verlauf der Bewegung des Ventilelements werden also nur der, bzw. die übrige(n) Federabschnitt(e) weiter gestaucht. Wegen der Reihenschaltung aller Federabschnitte wird dadurch die resultierende Federkonstante größer, das heißt bei einer jeweils gleichen Wegänderung ist die zugehörige Kraftänderung größer. Auf diese Weise wird die Bewegung des Ventilelements nun mit vergleichsweise hoher Kraft und somit stärker abgebremst.

Mit dieser grundsätzlichen Anordnung der Federeinrichtung ist eine Vielzahl von Ausführungsformen möglich. Beispielsweise können mehrere Federabschnitte in Reihe geschaltet sein, wobei zwischen zwei benachbarten Federabschnitten jeweils ein Zwischenstück angeordnet ist. Vorzugsweise schlagen - bei mehreren Zwischenstücken - diese im Verlauf der Bewegung des Ventilelements nacheinander an jeweilige Abschnitte des Gehäuses an. Dadurch ist die resultierende Federkennlinie vielfältig dimensionierbar. Günstig kann es beispielsweise sein, eine erste Phase der Ankerbewegung, bei welcher noch kein Zwischenstück an seinem Anschlag angeschlagen ist, innerhalb des zur Verfügung stehenden maximalen Ankerhubs vergleichsweise groß auszulegen, so dass die Bremswirkung vergleichsweise spät aber dafür stark einsetzt. Eine insgesamt progressive Federkernlinie wird sogar dann erreicht, wenn die einzelnen Federabschnitte eine gleiche Federkonstante besitzen. Die Federabschnitte können beispielsweise als getrennte Federn realisiert sein, die an ihren Endabschnitten fest über ein jeweiliges Zwischenstück gekoppelt sind. Alternativ bilden sie eine zusammenhängende Feder, auf welche in bestimmten Abständen ein oder mehrere Zwischenstücke aufgesetzt sind. Dadurch wird insgesamt nur eine Feder benötigt, wodurch die Herstellungskosten gesenkt werden, und die Zuverlässigkeit der Federeinrichtung gesteigert wird.

Weiterhin wird ein Schaltventil vorgeschlagen, dessen Federabschnitte unterschiedliche Federkonstanten aufweisen.Unabhängig von deren Anzahl, Ausführung und Anordnung können die einzelnen Federabschnitte dabei eine in sich konstante oder auch progressive Federkennlinie aufweisen. Letzteres ist beispielsweise bei Schraubenfedern konstruktiv möglich. Dabei wird durch das erfindungsgemäße Schaltventil die Progression der Federkennlinie insgesamt weiter verstärkt. Entsprechend ist die Wirkung beim Abbremsen des Ventilelements vor Erreichen der Endlage noch stärker.

Die Federeinrichtung des erfindungsgemäßen Schaltventils lässt sich flexibler einsetzen, wenn mindestens ein Federabschnitt eine Schraubenfeder, Tellerfeder, Ringscheibe und/oder Wellscheibe umfasst. Dadurch kann die Federeinrichtung in zahlreichen weiteren Varianten ausgeführt sein, so dass sie noch besser an jeweilige Anforderungen bezüglich Kraft, Kennlinie, Federhub, Platzbedarf, Dauerfestigkeit oder Herstellkosten angepasst werden kann.

Eine weitere Ausgestaltung der Erfindung sieht vor, dass die mindestens zwei Federabschnitte Schraubenfedern mit unterschiedlichen Durchmessern umfassen, und dass das Zwischenstück eine topfförmige Bauform aufweist, derart, dass jeweils zwei Federabschnitte funktional in Reihe geschaltet sind, räumlich jedoch koaxial ineinander angeordnet sind. Auf diese Weise kann eine besonders kompakte Bauform der Federeinrichtung hergestellt werden, so dass das Schaltventil insgesamt klein bauen kann.

Eine Ausgestaltung der Erfindung sieht vor, dass das Schaltventil ein elektromagnetisches Schaltventil ist. Damit kann die Erfindung vorteilhaft bei einer besonders häufig vorkommenden Bauart von Schaltventilen eingesetzt werden.

Eine weitere Ausgestaltung des Schaltventils sieht vor, dass es ein Schaltventil in einer Einspritzanlage, einem Automatikgetriebe oder einem Antiblockiersystem eines Kraftfahrzeugs ist. Derlei Anwendungen erfordern ein besonders präzises Arbeiten des Schaltventils. Dies wird unterstützt durch die erfindungsgemäße Federeinrichtung, welche aus mechanischen Bauteilen besteht, die präzise gefertigt werden können. Daraus ergibt sich ein entsprechend präzises Arbeiten des Schaltventils insgesamt. Insbesondere is die Erfindung geeignet zum Einsatz bei einem Mengensteuerventil einer Kraftstoff-Hochdruckpumpe in einem Common-Rail-Einspritzsystem.

Nachfolgend werden beispielhafte Ausführungsformen der Erfindung unter Bezugnahme auf die Zeichnung erläutert. In der Zeichnung zeigen:

Figur 1    ein funktionales Blockschaltbild einer Federeinrichtung eines Schaltventils;

Figur 2    eine Federkennlinie passend zu der Figur 1; und

Figur 3    eine Ausführungsform eines Schaltventils in einer Schnittdarstellung.

Es werden für funktionsäquivalente Elemente und Größen in allen Figuren auch bei unterschiedlichen Ausführungsformen die gleichen Bezugszeichen verwendet.

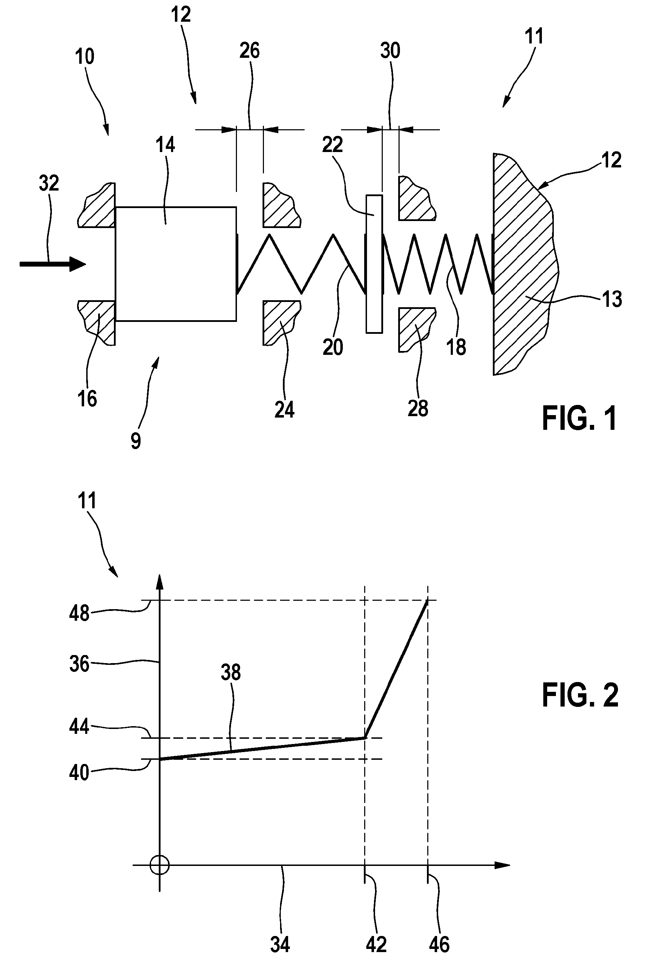

Figur 1 zeigt einen Bereich eines Schaltventils 10 mit einer elektromagnetischen Betätigungseinrichtung 9 und mit einer Federeinrichtung 11 in einer schematischen und vereinfachten Darstellung. Bei dem Schaltventil 10 kann es sich beispielsweise um eine elektromagnetisches Mengensteuerventil handeln, mit dem die Kraftstoffmenge gesteuert wird, die einer Hochdruckpumpe in einem Common-Rail-Kraftstoffsystem zugeleitet wird.

Dargestellt sind verschiedene Abschnitte eines nicht näher erläuterten Gehäuses 12. Im linken Teil der Figur 1 ist ein Anker 14 gezeigt, der mit einem in Figur 1 nicht gezeigten Ventilelement gekoppelt ist und in der dargestellten Ausgangslage an einem Ruhesitz 16 anliegt. Weitere Elemente der besagten Betätigungseinrichtung, wie etwa eine Spule oder ein Polkern, sind in der Figur 1 nicht gezeichnet. Der Ruhesitz 16 stellt ein Element des Gehäuses 12 dar, oder ist mit diesem verbunden. In der Zeichnung rechts ist ein Abschnitt 13 des Gehäuses 12 gezeichnet, an welchem sich ein erster Federabschnitt 18 der Federeinrichtung 11 abstützt. An den ersten Federabschnitt 18 schließt sich in der Zeichnung nach links ein zweiter Federabschnitt 20 an, der an seinem linken Endabschnitt an dem Anker 14 anliegt. Die beiden Federabschnitte 18 und 20 sind also zwischen Anker 14 und Gehäuseabschnitt 13 verspannt. Zwischen dem ersten Federabschnitt 18 und dem zweiten Federabschnitt 20 ist ein Zwischenstück 22 angeordnet. Ein zum Gehäuse 12 gehörender Hubanschlag 24 begrenzt die Bewegung des Ankers 14 in der Zeichnung nach rechts. Der mögliche Ankerhub ist mit 26 bezeichnet. Ein ebenfalls gehäuseseitiger Anschlag 28 begrenzt die Bewegung des Zwischenstücks 22, wobei die mögliche Bewegung des Zwischenstücks 22 mit 30 bezeichnet ist. Im dargestellten Bereich ist das Schaltventil 10 im Wesentlichen rotationssymmetrisch gebaut.

In der Figur 1 ist eine unbestromte Ausgangsstellung des Schaltventils 10 gezeichnet. Der Anker 14 liegt an seinem Ruhesitz 16 an, während das Zwischenstück 22 nicht an seinem Anschlag 28 anliegt. Die Bewegung des Ankers 14, der beiden Federabschnitte 18 und 20, sowie des Zwischenstücks 22 erfolgen in axialer Richtung, das heißt in der Zeichnung der Figur 1 in der horizontalen Richtung. Ein Pfeil 32 veranschaulicht dies.

Bei einer Bestromung des Schaltventils bzw. einer Erregerspule wird der Anker 14 entsprechend dem Pfeil 32 bewegt. Dabei werden die Federabschnitte 18 und 20 auf Druck beansprucht, also gestaucht. Vorliegend weist der zweite Federabschnitt 20 eine größere Federkonstante auf als der erste Federabschnitt 18. Entsprechend wird bei der Bewegung des Ankers 14 der erste Federabschnitt 18 stärker komprimiert als der zweite Federabschnitt 20. Der zweite Federabschnitt 20 ist also vergleichsweise steif. Im Zuge der Bewegung des Ankers 14 schlägt das Zwischenstück 22 gegen den Anschlag 28 an. Hierdurch wird der erste Federabschnitt 18 überbrückt, er kann nicht weiter gestaucht werden und ist insoweit wirrkungslos. Daraus folgt, dass die Federwirkung der Federeinrichtung nachfolgend nur noch von dem zweiten und steiferen Federabschnitt 20 bestimmt wird. Wegen der größeren Federkonstante des zweiten Federabschnitts 20 wirkt das Verhalten der Federeinrichtung "sprunghaft" progressiv. Die Wirkung des zweiten steiferen Federabschnitts 20 erstreckt sich dabei überwiegend auf einen Bewegungsbereich des Ankers 14 in der Nähe des Hubanschlags 24. In dieser letzten Phase der Ankerbewegung wird daher der Anker 14 besonders stark gebremst. Die Bewegung des Ankers 14 endet am Hubanschlag 24, an dem eine eventuelle restliche Bewegungsenergie vollständig abgebaut wird.

Man erkennt, dass der maximale Hub 30 des Zwischenstücks 22 so gewählt sein muss, dass das Zwischenstück am Anschlag 28 anliegt, bevor der Anker 14 am Hubanschlag 24 in Anlage kommt. Insgesamt ist die Wirkung der Federeinrichtung so, dass der Anker in seiner ersten Bewegungsphase, ausgehend vom Ruhesitz 16 zunächst wenig gebremst wird. Das bedeutet, dass die Ankerbewegung vergleichsweise schnell erfolgen kann und das Schaltventil 10 ebenfalls schnell schaltet. Erst kurz vor dem Erreichen des Hubanschlags 24 setzt eine vergleichsweise starke Abbremsung durch die Federeinrichtung ein. Dadurch wird die Aufschlaggeschwindigkeit des Ankers an dem Hubanschlag 24 stark verringert.

Wird die Bestromung unterbrochen, so entfällt damit die in der Richtung des Pfeils 32 wirkende magnetische Kraft. In der Folge wird der Anker 14 durch die Federeinrichtung 11 entgegen der Richtung des Pfeils 32 wieder auf den Ruhesitz 16 zurück bewegt. Eventuelle zusätzliche Vorrichtungen, um den Anker 14 auf den Ruhesitz 16 zurück zu bewegen - wie etwa eine zweite Erregerspule - sind in der Figur 1 nicht gezeichnet.

Eine weitere und nicht dargestellte Ausführungsform des Schaltventils ist entsprechend der Figur 1 gebaut, weist jedoch drei statt zwei Federabschnitte und und entsprechend zwei statt nur ein Zwischenstück auf. Dabei weist der dem Gehäuseabschnitt nahe liegende Federabschnitt eine kleine, der dem Anker nahe liegende Federabschnitt eine große, und ein zwischen beiden Federabschnitten und angeordneter mittlerer Federabschnitt eine mittlere Federkonstante auf. Dazu passend liegt eine den Hub des zweiten Zwischenstücks bestimmende Strecke in ihrer Größe zwischen der den Ankerhub bestimmenden Strecke und der den Hub des ersten Zwischenstücks bestimmende Strecke.

Eine andere nicht dargestellte Ausführungsform des Schaltventils weist je einen Federabschnitt mit einer Tellerfeder und einer Ringscheibe auf. Eine nochmals andere und ebenfalls nicht dargestellte Ausführungsform des Schaltventils weist je einen Federabschnitt mit einer Schraubenfeder und einer Wellscheibe auf.

Figur 2 zeigt eine resultierende Federkennlinie einer zur Figur 1 ähnlichen Anordnung aus zwei Federabschnitten. Dargestellt ist ein Koordinatensystem, auf dessen Abszisse ein die Bewegung des Ankers 14 bestimmender Federweg 34, und auf dessen Ordinate eine Federkraft 36 aufgetragen sind. Eine Federkennlinie 38 veranschaulicht den Zusammenhang. Ein Federweg 34 von null entspricht dabei einem unbestromten Ausgangszustand nach der Figur 1.

Von einem Federweg null im linken Bereich der Figur 2 ausgehend und mit einer Federkraft 40 beginnend, steigt die Federkraft mit zunehmendem Federweg an. Bei einem Federweg 42 wird eine Federkraft 44 erreicht. Dies ist genau jener Federweg, bei dem das Zwischenstück 22 an dem Anschlag 28 in Anlage kommt. Ab diesem Hub wird der erste Federabschnitt 18 überbrückt, das heißt, er wird nicht weiter gestaucht. Im weiteren Verlauf der Bewegung des Ankers 14 in Richtung auf den Hubanschlag 24 wird nur noch der zweite Federabschnitt 20 beaufschlagt. Entsprechend einer größeren Federkonstante des zweiten Federabschnitts 20 wird die Steigung der Federkennlinie 38 ab dem Federweg 42 größer, die Kennlinie ist insgesamt also progressiv. Bei einem Federweg 46 schließlich trifft der Anker 14 auf seinen Hubanschlag 24 auf, wobei eine maximale Federkraft 48 erreicht wird. Der Federweg 46 entspricht der Strecke 26 der Figur 1.

Man erkennt, wie durch eine Reihenschaltung zweier Federabschnitte 18 und 20 die resultierende Federkennlinie 38 stark progressiv mit einer sprunghaften Änderung der Steigung der Federkennlinie 38 wird. Eine Progression der Federkennlinie 38 ergibt sich selbst dann, wenn die Federkonstanten des ersten Federabschnitts 18 und des zweiten Federabschnitts 20 gleich sind. Dies ergibt sich ebenso, wenn - abweichend von der Darstellung in der Figur 1 - die beiden Federabschnitte 18 und 20 eine einzige Feder bilden und das Zwischenstück 22 nur in den schraubenförmigen Gang der Feder dauerhaft eingefügt ist.

Beträgt die Federkonstante für den ersten Federabschnitt R1 und die Federkonstante für den zweiten Federabschnitt R2, so ergibt sich eine resultierende Beziehung nach der Formel:

$$R_{ges} = 1 / ( 1 / R1 + 1 / R2 )$$

Die sich ergebende gesamte Federkonstante $R_{ges}$ ist also kleiner als jeweils R1 oder R2 und somit vergleichsweise weich, solange beide Federabschnitte in Funktion sind.

In der Figur 2 gilt diese Formel für einen Federweg 34 zwischen null und dem Federweg 42. Zwischen dem Federweg 42 und dem Federweg 46 wirkt sich dagegen die Federkonstante R1 des ersten Federabschnitts 20 nicht mehr aus, sondern es gilt allein die Federkonstante R2. Allgemein gilt, dass bei der erfindungsgemäßen Reihenschaltung mehrerer Federabschnitte im Verlauf des Federwegs die Steifigkeit der resultierenden Feder nur zunehmen, aber nicht abnehmen kann.

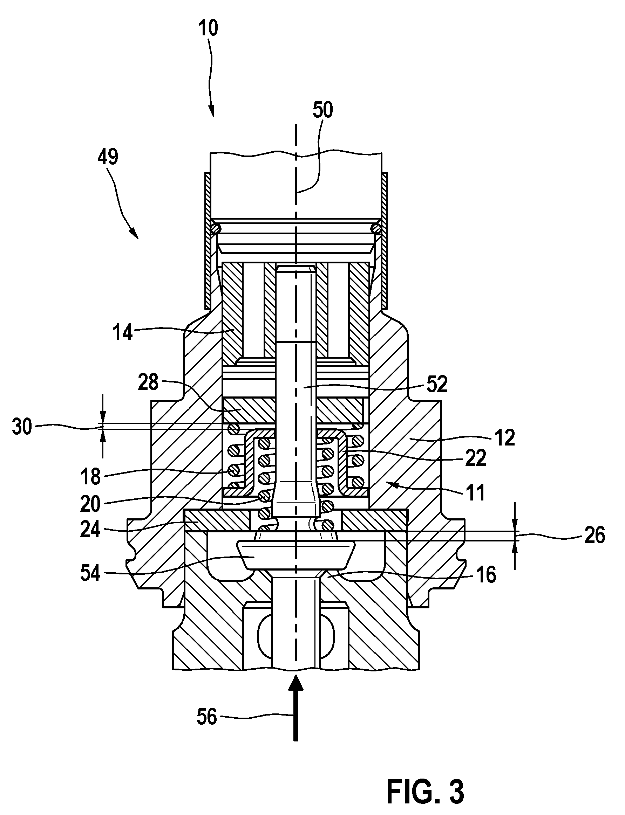

Figur 3 zeigt eine Ausführungsform eines Schaltventils 10 als ein elektromagnetisches Schaltventil 49 zum Schalten eines Fluids. Die Fluid führenden Bereiche sind in der Ansicht der Figur 3 nicht mit dargestellt. Die in der Figur 3 gezeigten Elemente sind im Wesentlichen rotationssymmetrisch um eine Achse 50 ausgeführt. Die Achse 50 verläuft in der Zeichnung der Figur 3 vertikal.

In dem Gehäuse 12 befindet sich ein axial verschiebbares Ventilelement 52 mit einem darauf fest angeordneten Ventilteller 54. Der Anker 14 ist vorliegend ebenfalls fest mit dem Ventilelement 52 gekoppelt. Zwischen dem topfförmigen Zwischenstück 22 und dem Anschlag 28 ist der erste Federabschnitt 18 angeordnet. Zwischen dem topfförmigen Zwischenstück 22 und dem Teller 54 ist der zweite Federabschnitt 20 angeordnet. Beide Federabschnitte 18 und 20 sind über das Zwischenstück 22 also gekoppelt und funktional in Reihe geschaltet. Vorliegend sind die beiden Federabschnitte 18 und 20 als Schraubenfedern mit unterschiedlichen Durchmessern ausgeführt.

Der Zustand des Schaltventils 10 nach Figur 3 entspricht dem unbestromten Ausgangszustand nach Figur 1, wobei der Ventilteller 54 an dem Ruhesitz 16 anliegt.

Bei einer Bestromung des Schaltventils 10 bewegt sich der Anker 14 und das mit dem Anker 14 fest verbundene Ventilelement 52 in Richtung eines Pfeils 56 in der Zeichnung nach oben. Dabei wird das zwischen den Federabschnitten 18 und 20 eingespannte topfförmige Zwischenstück 22 mitgeführt und schlägt nach Durchlaufen der Strecke 30 am Anschlag 28 an. Für den restlichen Hub des Ankers 14 wird daher allein der Federabschnitt 20 beansprucht und bremst mit seiner großen Federkonstante das Ventilelement 52 in der Endphase der Bewegung besonders stark ab. Die Bewegung endet mit dem Anschlag des Ventiltellers 54 am Hubanschlag 24.

Man erkennt, dass die Strecke 30, welche den maximalen Hub des Zwischenstücks 22 vorgibt, kleiner ist als die Strecke 26, welche den Hub des Ventiltellers 54 bzw. des Ankers 14 bestimmt. Im Vergleich zu den Abmessungen des Schaltventils 10 sind beide Strecken 26 und 30 klein. Die beiden Federabschnitte 18 und 20 sind außen bzw. innen am Zwischenstück 22 koaxial angeordnet. Die das Zwischenstück 22 bestimmende Topfform trägt besonders dazu bei, dass die Federeinrichtung 11 und damit das gesamte Schaltventil 10 platzsparend aufgebaut ist. Das Schaltventil der Figur 3 ist geeignet zur Anwendung in Kraftfahrzeugen in einer Einspritzanlage, einem Automatikgetriebe oder einem Antiblockiersystem.

Wird die Bestromung unterbrochen, nimmt das Schaltventil wieder die in der Figur 3 gezeigte Ausgangsstellung ein. Soweit übertragbar, entspricht dieser Vorgang dem der Beschreibung zu Figur 1.

**Patentansprüche**

1. Schaltventil (10) mit einem in einem Gehäuse (12) zwischen einem Ruhesitz (16) und einem Hubanschlag (24) schalt- bzw. bewegbaren Ventilelement (52), einer auf das Ventilelement (52) in einer ersten Richtung wirkenden Betätigungseinrichtung, und einer das Ventilelement (52) in einer zweiten Richtung beaufschlagenden Federeinrichtung (11), wobei erste und zweite Richtung entgegengesetzt sind, wobei die Federeinrichtung (11) eine progressive Federcharakteristik (38) aufweist.

2. Schaltventil (10) nach Anspruch 1, **dadurch gekennzeichnet, dass** die Federeinrichtung (11) eine Reihenschaltung von mindestens zwei Federabschnitten (18, 20) umfasst, wobei der maximale Federweg (30) eines Federabschnitts (18, 20) kleiner ist als der maximale Hub (26) des Ventilelements (52).

3. Schaltventil (10) nach Anspruch 2, **dadurch gekennzeichnet, dass** mindestens zwei Federabschnitte (18, 20) über ein Zwischenstück (22) gekoppelt sind, wobei das Zwischenstück (22) an einem Abschnitt (28) des Gehäuses (12) anschlägt, bevor der maximale Hub des Ventilelements (52) erreicht ist, so dass der weichere Federabschnitt (18) nachfolgend überbrückt wird.

4. Schaltventil (10) nach einem der Ansprüche 2 oder 3, **dadurch gekennzeichnet, dass** die Federabschnitte (18, 20) unterschiedliche Federkonstanten aufweisen.

5. Schaltventil (10) nach wenigstens einem der Ansprüche 2 oder 3, **dadurch gekennzeichnet, dass** mindestens ein Federabschnitt (18, 20) eine Schraubenfeder, Tellerfeder, Ringscheibe und/oder Wellscheibe umfasst.

6. Schaltventil (10) nach wenigstens einem der Ansprüche 2 bis 4, **dadurch gekennzeichnet, dass** die mindestens zwei Federabschnitte (18, 20) Schraubenfedern mit unterschiedlichen Durchmessern umfassen, und dass das Zwischenstück (22) eine topfförmige Bauform aufweist, derart, dass jeweils zwei Federabschnitte (18, 20) funktional in Reihe geschaltet sind, räumlich jedoch koaxial ineinander angeordnet sind.

7. Schaltventil (10) nach wenigstens einem der vorhergehenden Ansprüche, **dadurch gekennzeichnet, dass** es ein elektromagnetisches Schaltventil (49) ist.

8. Schaltventil (10) nach wenigstens einem der vorhergehenden Ansprüche, **dadurch gekennzeichnet, dass** es ein Schaltventil in einer Einspritzanlage, einem Automatikgetriebe oder einem Antiblockiersystem eines Kraftfahrzeugs ist.

**Claims**

1. Switching valve (10) having a valve element (52) which is switchable or movable in a housing (12) between a rest seat (16) and a stroke stop (24), having an actuating device which acts on the valve element (52) in a first direction, and having a spring device (11) which acts on the valve element (52) in a second direction, wherein the first and second directions are opposite, wherein the spring device (11) has a progressive spring characteristic (38).

2. Switching valve (10) according to Claim 1, **characterized in that** the spring device (11) comprises at least two spring sections (18, 20) connected in series, wherein the maximum spring travel (30) of a spring section (18, 20) is smaller than the maximum stroke (26) of the valve element (52).

3. Switching valve (10) according to Claim 2, **characterized in that** at least two spring sections (18, 20) are coupled by way of an intermediate piece (22), wherein the intermediate piece (22) abuts against a section (28) of the housing (12) before the maximum stroke of the valve element (52) is reached, such that the relatively soft spring section (18) is subsequently bypassed.

4. Switching valve (10) according to either of Claims 2 and 3, **characterized in that** the spring sections (18, 20) have different spring constants.

5. Switching valve (10) according to at least one of Claims 2 and 3, **characterized in that** at least one spring section (18, 20) comprises a helical spring, disk spring, annular washer and/or corrugated washer.

6. Switching valve (10) according to at least one of Claims 2 to 4, **characterized in that** the at least two spring sections (18, 20) comprise helical springs of different diameters, and **in that** the intermediate piece (22) has a pot-shaped structural form such that in each case two spring sections (18, 20) are connected functionally in series but are arranged coaxially one inside the other.

7. Switching valve (10) according to at least one of the preceding claims, **characterized in that** said switching valve is an electromagnetic switching valve (49).

8. Switching valve (10) according to at least one of the preceding claims, **characterized in that** said switching valve is a switching valve in an injection system, in an automatic gearbox or in an anti-lock braking system of a motor vehicle.

**Revendications**

1. Soupape de commande (10) comprenant un élément de soupape (52) pouvant être commuté ou déplacé dans un boîtier (12) entre un siège de repos (16) et une butée de levée (24), un dispositif d'actionnement agissant sur l'élément de soupape (52) dans une première direction et un dispositif de ressort (11) sollicitant l'élément de soupape (52) dans une deuxième direction, la première et la deuxième direction étant opposées, le dispositif de ressort (11) présentant une caractéristique de ressort progressive (38).

2.  Soupape de commande (10) selon la revendication 1, **caractérisée en ce que** le dispositif de ressort (11) comprend un montage en série d'au moins deux portions de ressort (18, 20), la course de ressort maximale (30) d'une portion de ressort (18, 20) étant inférieure à la course maximale (26) de l'élément de soupape (52).

3.  Soupape de commande (10) selon la revendication 2, **caractérisée en ce qu'**au moins deux portions de ressort (18, 20) sont accouplées par le biais d'une pièce intermédiaire (22), la pièce intermédiaire (22) butant contre une portion (28) du boîtier (12) avant que la course maximale de l'élément de soupape (52) soit atteinte, de sorte que la portion de ressort plus souple (18) soit ensuite surmontée.

4.  Soupape de commande (10) selon l'une quelconque des revendications 2 ou 3, **caractérisée en ce que** les portions de ressort (18, 20) présentent différentes constantes de ressort.

5.  Soupape de commande (10) selon au moins l'une quelconque des revendications 2 ou 3, **caractérisée en ce qu'**au moins une portion de ressort (18, 20) comprend un ressort à boudin, un ressort Belleville, une rondelle élastique et/ou un disque ondulé.

6.  Soupape de commande (10) selon au moins l'une quelconque des revendications 2 à 4, **caractérisée en ce que** les au moins deux portions de ressort (18, 20) comprennent des ressorts à boudin avec des diamètres différents, et **en ce que** la pièce intermédiaire (22) présente une forme en forme de porte-échantillons de telle sorte que deux portions de ressort (18, 20) soient à chaque fois montées fonctionnellement en série, mais soient disposées spatialement de manière coaxiale l'une dans l'autre.

7.  Soupape de commande (10) selon au moins l'une quelconque des revendications précédentes, **caractérisée en ce qu'**il s'agit d'une soupape de commande électromagnétique (49).

8.  Soupape de commande (100 selon au moins l'une quelconque des revendications précédentes, **caractérisée en ce que** qu'il s'agit d'une soupape de commande dans une installation d'injection, une transmission automatique ou un système d'antiblocage d'un véhicule automobile.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0698738 A2
- DE 19935098 A1
- DE 10254246 A1
- DE 102007034038 A1
- DE 102007028960 A1
- DE 102005022661 A1
- DE 102004061798 A1
- DE 10327411 A1
- DE 19834121 A1
- EP 1701031 A1
- EP 1471248 A1
- EP 1296061 A2